# FASCICULE DE BREVET EUROPEEN

(11) **EP 1 636 471 B1**
(45) Date de publication et mention de la délivrance du brevet: **25.04.2007**
(21) Numéro de dépôt: 04767266.2
(22) Date de dépôt: 04.06.2004
(51) Int. Cl.: F02D 41/14, F02D 35/00, F02D 13/02, F02D 33/00, F02B 29/06

(54) **PROCEDE DE COMMANDE DE FONCTIONNEMENT D'UN CYLINDRE DE MOTEUR A COMBUSTION INTERNE, MOTEUR COMPRENANT UN CYLINDRE FONCTIONNANT SELON UN TEL PROCEDE, ET VEHICULE AUTOMOBILE EQUIPE D'UN TEL MOTEUR**
VERFAHREN ZUR STEUERUNG DES BETRIEBS DES ZYLINDERS EINES VERBRENNUNGSMOTORS, EINEN GEMÄSS DEM VERFAHREN BETRIEBENEN ZYLINDER UMFASSENDER MOTOR UND MIT DEM MOTOR VERSEHENES KRAFTFAHRZEUG
METHOD FOR CONTROLLING OPERATION OF THE CYLINDER OF AN INTERNAL COMBUSTION ENGINE, AN ENGINE COMPRISING A CYLINDER OPERATING ACCORDING SAID METHOD AND A MOTOR VEHICLE PROVIDED WITH SAID ENGINE

(30) Priorité: 25.06.2003 FR 0307692
(43) Date de publication de la demande: 22.03.2006
(73) Titulaire: Peugeot Citroën Automobiles S.A., 78140 Vélizy Villacoublay (FR)
(72) Inventeur: LANTEIRES, Fabien, F-75014 Paris (FR)
(74) Mandataire: Domenego, Bertrand
(86) Numéro de dépôt international: PCT/FR2004/001398
(87) Numéro de publication internationale: WO 2005/010334

(56) Documents cités:
- US-A- 5 183 011
- US-A- 5 647 312
- US-B1- 6 182 621
- US-B2- 6 484 677

## Description

Procédé de commande de fonctionnement d'un cylindre de moteur à combustion interne, moteur comprenant un cylindre fonctionnant selon un tel procédé, et véhicule automobile équipé d'un tel moteur.

La présente invention concerne un procédé de commande du fonctionnement d'un cylindre de moteur à combustion interne, ledit un cylindre étant pourvu d'une chambre de combustion susceptible d'être ouverte ou fermée à l'admission et ouverte ou fermée à l'échappement, et d'au moins un injecteur de carburant comme montré dans le US 6,182,621 B1, procédé dans lequel, durant un même cycle de fonctionnement du cylindre, les phases suivantes sont réalisées :
- une phase d'ouverture à l'échappement entre un instant d'ouverture d'échappement, et un instant de fermeture d'échappement ;
- une première phase d'ouverture à l'admission entre un premier instant d'ouverture d'admission postérieur à l'instant d'ouverture d'échappement, et un premier instant de fermeture d'admission ;
- une deuxième phase d'ouverture à l'admission entre un deuxième instant d'ouverture d'admission et un deuxième instant de fermeture d'admission ;
- une phase d'injection de carburant entre un instant de début d'injection, et un instant de fin d'injection ; et
- une phase de combustion du mélange air-carburant contenu dans la chambre.

Un tel procédé de commande est déjà connu dans l'état de la technique, notamment par le document FR 2 796 418, et vise généralement à supprimer les phénomènes de cliquetis, sans dégrader de façon significative les performances du moteur.

L'invention a pour objet un tel procédé de commande, permettant en outre d'augmenter le remplissage du moteur par balayage des gaz brûlés résiduels, sans générer de polluants supplémentaires.

A cet effet, dans un procédé de commande conforme à l'invention, l'instant de fermeture d'échappement est compris entre le premier instant d'ouverture d'admission et le deuxième instant d'ouverture d'admission.

Grâce à cette disposition, on obtient une phase durant laquelle l'orifice d'admission est ouvert alors que l'orifice d'échappement n'est pas encore fermé. Cette première phase d'ouverture à l'admission, appelée « ouverture pilote », précède au moins en partie l'ouverture à l'admission dite « principale ». L'ouverture pilote, qui se produit alors que la chambre de combustion est encore ouverte à l'échappement, permet de remplacer les gaz brûlés résiduels par des gaz frais. Ces derniers augmentent le remplissage du moteur sans créer de polluants.

En outre, on crée ainsi une onde de pression dans le cylindre, permettant encore d'améliorer le remplissage.

Suivant d'autres caractéristiques du procédé selon l'invention :
- le premier instant de fermeture d'admission est postérieur à l'instant de fermeture d'échappement ;
- le premier instant de fermeture d'admission précède le deuxième instant d'ouverture d'admission.

En variante, le deuxième instant d'ouverture d'admission précède le premier instant de fermeture d'admission.

Suivant encore une autre caractéristique du procédé selon l'invention, le premier instant de fermeture d'admission précède l'instant de début d'injection.

En variante, l'instant de début d'injection précède le premier instant de fermeture d'admission.

Suivant encore une autre caractéristique du procédé selon l'invention, l'instant de début d'injection est compris entre le premier instant d'ouverture d'admission et l'instant de fermeture d'échappement.

En variante, l'instant de fermeture d'échappement précède l'instant de début d'injection.

Suivant une caractéristique avantageuse du procédé selon l'invention, on règle l'amplitude de l'ouverture à l'admission, de façon que l'amplitude de l'ouverture durant la première phase d'ouverture à l'admission soit différente de l'amplitude de l'ouverture durant la deuxième phase d'ouverture à l'admission.

L'invention vise également un moteur à combustion interne ayant au moins un cylindre pourvu d'une chambre de combustion susceptible d'être ouverte ou fermée à l'admission et ouverte ou fermée à l'échappement, et d'au moins un injecteur de carburant, caractérisé en ce que ledit cylindre fonctionne selon un procédé tel que défini ci-dessus.

On va maintenant décrire des modes particuliers de réalisation de l'invention en référence aux Figures des dessins annexés, sur lesquels :
- la Figure 1 est une vue schématique partielle en coupe, dans un plan axial, d'un cylindre de moteur à combustion interne de véhicule automobile, d'un premier type adapté à la mise en oeuvre d'un procédé selon l'invention ;
- la Figure 2 est une vue schématique partielle, en plan de dessus, d'un cylindre de moteur à combustion interne de véhicule automobile, d'un deuxième type adapté à la mise en oeuvre d'un procédé conforme à l'invention ;
- les Figures 3 à 12 sont des diagrammes représentatifs des commandes d'admission, d'échappement et d'injection, chacun correspondant à un procédé de commande selon un mode particulier respectif de réalisation de l'invention ; et
- la Figure 13 est un graphique illustrant la variation de la pression régnant dans le cylindre, au cours des différentes phases du procédé illustrées sur la Figure 5.

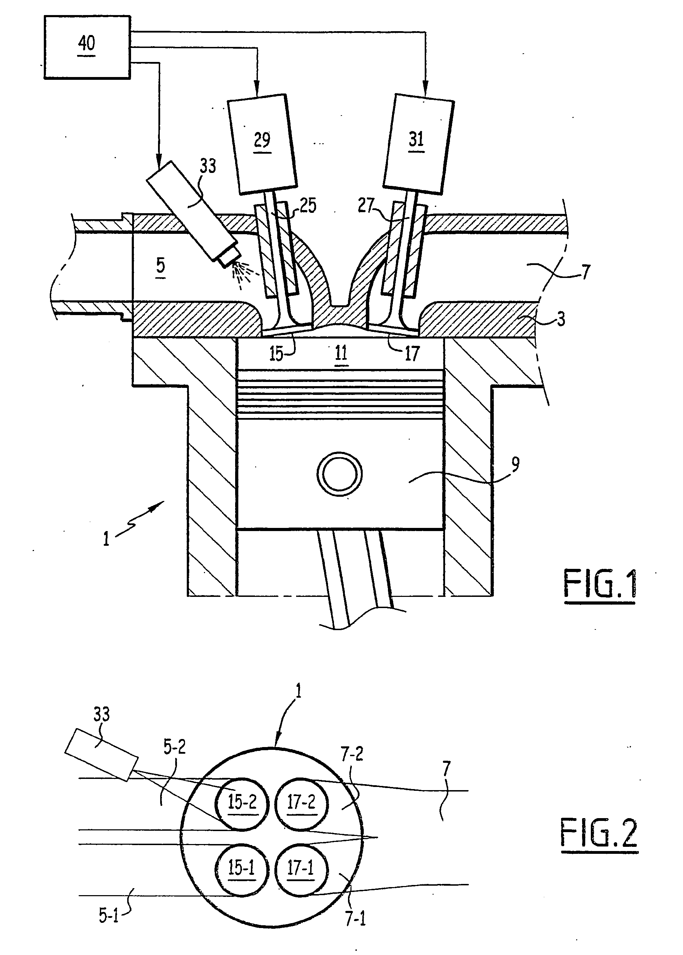

Sur la Figure 1, on a représenté en coupe une partie d'un moteur à combustion interne d'un véhicule automobile. Cette partie de moteur comprend essentiellement un cylindre 1, et une culasse 3 coiffant ledit cylindre, dans laquelle sont formés d'une part un conduit d'admission 5, et d'autre part un conduit d'échappement 7.

Un piston 9, monté coulissant à l'intérieur du cylindre, délimite avec la culasse 3 et les parois périphériques du cylindre, une chambre de combustion 11. Le conduit d'admission 5 et le conduit d'échappement 7 débouchent dans la chambre de combustion 11, respectivement par un orifice d'admission 15 et un orifice d'échappement 17.

La partie de moteur représentée comprend en outre une soupape d'admission 25 et une soupape d'échappement 27, associées au cylindre 1, et commandées par des actionneurs respectifs 29, 31 de façon à sélectivement obturer ou libérer respectivement l'orifice d'admission 15 et l'orifice d'échappement 17.

La partie de moteur représentée associée au cylindre 1 comprend de plus un injecteur de carburant 33, agencé pour injecter du carburant de façon contrôlée électroniquement dans le conduit d'admission 5.

Le pilotage des actionneurs 29, 31 et de l'injecteur 33 est assuré par une unité électronique de contrôle et de commande 40. Cette unité électronique de contrôle et de commande 40 assure également la commande d'allumage dans la chambre de combustion 11, au moyen d'une bougie, non représentée.

Sur la Figure 2, on a représenté schématiquement une partie de moteur analogue à celle de la Figure 1, mais qui s'en distingue essentiellement en ce qu'elle comprend deux conduits d'admission 5-1, 5-2, débouchant de façon séparée dans la chambre de combustion du cylindre 1 par des orifices d'admission respectifs distincts 15-1, 15-2. Chaque orifice d'admission 15-1, 15-2 est associé à une soupape d'admission respective, les deux soupapes pouvant être commandées indépendamment l'une de l'autre.

Dans l'exemple représenté sur la Figure 2, l'injecteur 33 est disposé de façon à délivrer du carburant uniquement dans l'un 5-2 des conduits d'admission, de sorte que l'autre 5-1 des conduits d'admission ne peut conduire que de l'air vers la chambre de combustion. En d'autres termes, le mélange air/carburant n'est introduit dans la chambre de combustion que par l'intermédiaire du conduit 5-2.

Dans l'exemple représenté sur la Figure 2, il est également prévu deux orifices d'échappement 17-1, 17-2 communiquant avec deux conduits d'échappement respectifs 7-1, 7-2 qui s'étendent séparément jusqu'à une jonction en un conduit d'échappement commun 7. On supposera par la suite que les deux orifices d'échappement 17-1, 17-2 sont associés à deux soupapes d'échappement respectives animées de mouvements liés et identiques, de sorte que les deux soupapes et les deux orifices d'échappement 17-1, 17-2 peuvent être assimilés à un ensemble d'une soupape d'échappement unique et d'un orifice d'échappement unique, tel qu'illustrés sur la Figure 1.

Il est cependant entendu que l'invention n'est pas limitée à un tel agencement, ni à un pilotage en phase des soupapes.

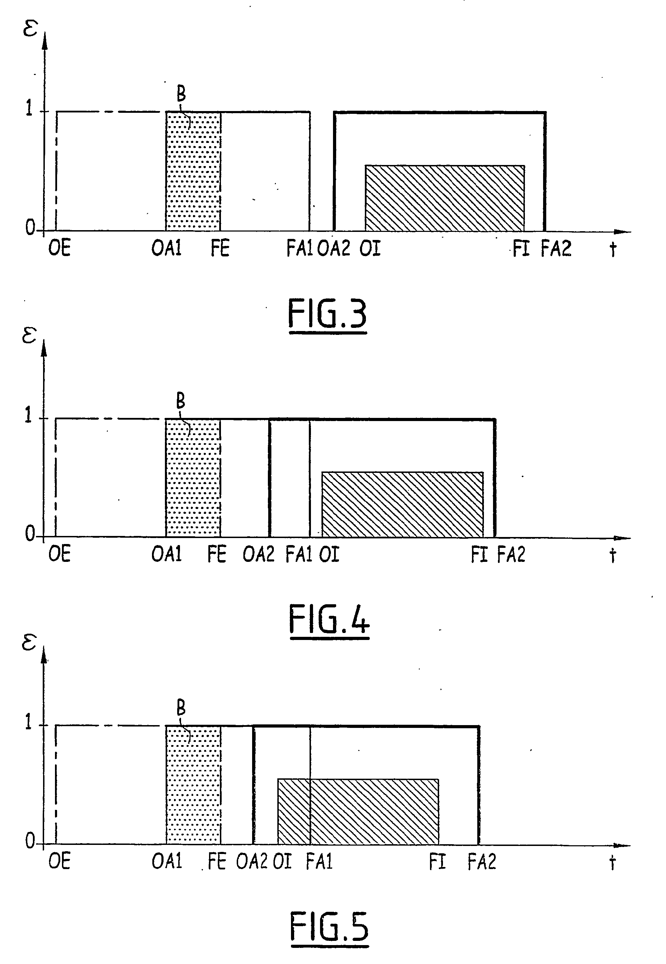

En référence aux Figures 3 à 12, on va à présent décrire plusieurs modes de réalisation du procédé de commande selon l'invention. Ce procédé sera illustré par des diagrammes montrant les phases d'ouverture et de fermeture des soupapes d'admission et d'échappement, ainsi que la phase d'injection de carburant.

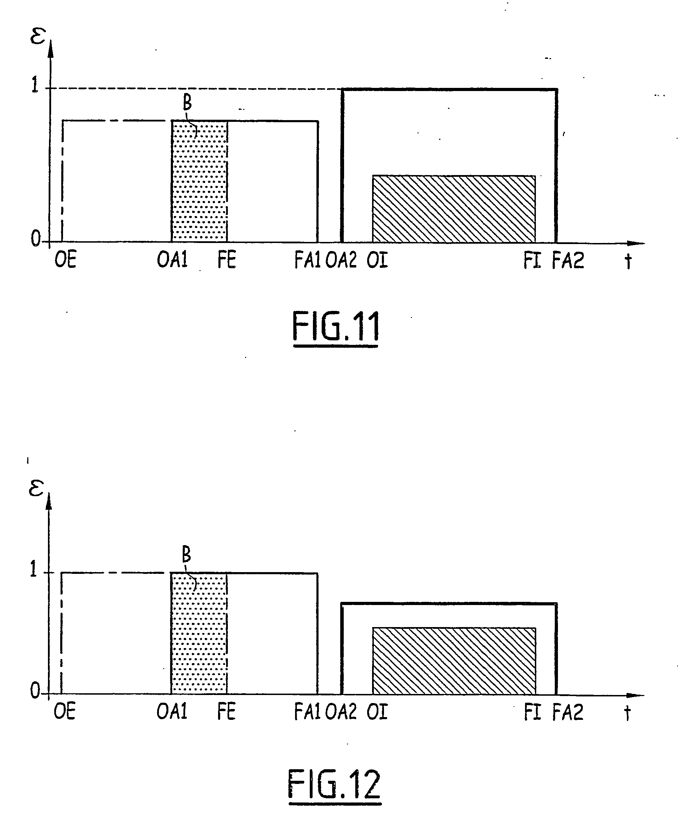

Sur ces diagrammes, les phases de fonctionnement des soupapes et de l'injecteur seront représentées par l'état ε des soupapes sur des intervalles de temps t correspondant à des plages d'angle de rotation α du vilebrequin. L'état des soupapes sera supposé soit complètement ouvert (ε>0), soit complètement fermé (ε=0), de façon à simplifier la représentation graphique des phases de fonctionnement. Ainsi, on supposera que la variable de levée ou d'état ε des soupapes, représentée en ordonnées, passe instantanément de l'une à l'autre parmi sa valeur minimale (égale à 0) et sa valeur maximale (toujours prise égale à 1 par convention, sauf pour les modes de réalisation des Figures 11 et 12).

Chaque mode de réalisation du procédé de commande pourra être mis en oeuvre avec l'une et/ou l'autre des configurations de cylindre représentées sur les Figures 1 et 2. Lorsque la configuration de la Figure 1 est adaptée à la mise en oeuvre d'un mode de réalisation du procédé, ce mode de réalisation pourra également être mis en oeuvre avec la configuration de la Figure 2, dans laquelle les deux soupapes d'admission d'une part, et les deux soupapes d'échappement d'autre part, sont en permanence dans le même état, donc animées de mouvements identiques, et donc assimilables respectivement à une seule soupape d'admission et à une seule soupape d'échappement.

### Premier mode : Figure 3

Ce mode est réalisable avec la configuration de la Figure 1.

Un cycle de fonctionnement du cylindre comprend en premier lieu une phase d'ouverture à l'échappement, définie par un instant initial d'ouverture d'échappement OE, et un instant final de fermeture d'échappement FE.

Cette phase permet l'évacuation des gaz de combustion, produits pendant le cycle précédent et contenus dans la chambre de combustion.

Le cycle de fonctionnement comprend en outre une première phase d'ouverture à l'admission, définie par un premier instant initial d'ouverture d'admission OA1, et un premier instant final de fermeture d'admission FA1.

Le cycle comprend de plus une deuxième phase d'ouverture à l'admission, définie par un deuxième instant initial d'ouverture d'admission OA2, et un deuxième instant final de fermeture d'admission FA2.

Le cycle comprend en outre une phase d'injection de carburant, définie par un instant de début d'injection 01, et un instant de fin d'injection FI.

Comme on le voit, la deuxième phase d'ouverture à l'admission est postérieure à la première, la phase d'injection étant réalisée durant cette deuxième phase d'ouverture à l'admission.

La première phase d'ouverture à l'admission sera dite « ouverture pilote », tandis que la deuxième phase d'ouverture à l'admission sera dite « ouverture principale ».

Le premier instant d'ouverture à l'admission OA1 se produit durant la phase d'ouverture à l'échappement, de sorte qu'il existe un recouvrement de la phase d'ouverture à l'échappement et de la phase pilote d'admission. Cette phase de recouvrement B pourra être appelée « phase de balayage » des gaz brûlés résiduels. En effet, durant cette phase, il se produit une onde de surpression dans la chambre de combustion, due à l'introduction rapide d'air non carburé (ou air frais), qui balaye les gaz brûlés résiduels contenus dans la chambre de combustion.

L'instant de fermeture d'échappement FE se produit après le premier instant d'ouverture d'admission OA1 et avant le deuxième instant d'ouverture d'admission OA2, c'est-à-dire entre le début de la phase pilote d'admission et le début de la phase principale d'admission durant laquelle se produit la combustion.

Dans ce mode de réalisation, l'instant de fermeture d'échappement FE se produit avant la fin de la phase pilote d'admission et les phases d'admission pilote et principale sont disjointes, c'est-à-dire qu'elles se produisent en phase de recouvrement. D'autre part, les levées de soupape durant la phase d'admission pilote et durant la phase d'admission principale sont de même amplitude.

### Deuxième mode : Figure 4

Ce mode ne peut s'appliquer qu'à une configuration à deux soupapes d'admission, en particulier conforme à la Figure 2.

Ce deuxième mode de réalisation ne diffère du premier qu'en ce que la phase principale d'admission et la phase pilote d'admission ont une phase de recouvrement, à savoir que le premier instant de fermeture d'admission FA1 intervient après le deuxième instant d'ouverture d'admission OA2. Dans ce mode de réalisation, l'instant FA1 intervient avant l'instant de début d'injection OI.

Dans cet exemple de réalisation, et dans tous ceux des modes de réalisation qui ne peuvent être mise en oeuvre qu'avec une configuration à deux soupapes d'admission, la phase pilote d'admission est réalisée par la soupape placée dans le premier conduit d'admission 51, tandis que la phase d'admission principale est réalisée par la soupape placée dans le deuxième conduit d'admission 52 équipé de l'injecteur 33.

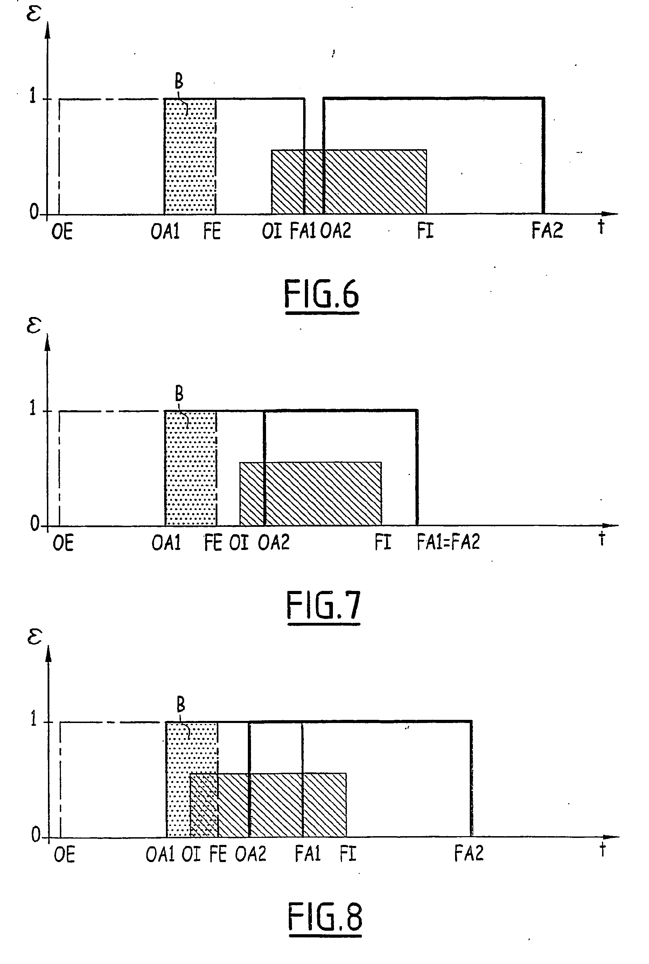

### Troisième mode : Figure 5

Ce mode est lui aussi réalisé avec une configuration selon la Figure 2.

Ce troisième mode de réalisation ne diffère du deuxième qu'en ce que l'instant de début d'injection 01 intervient avant la fin de la phase pilote d'admission, c'est-à-dire avant l'instant FA1.

### Quatrième mode : Figure 6

Ce mode de réalisation du procédé peut être exécuté avec une configuration conforme à la Figure 1.

En effet, les phases d'admission pilote et principale sont disjointes, comme dans le premier mode de réalisation.

Cette caractéristique constitue la seule différence de ce mode de réalisation par rapport au troisième mode illustré sur la Figure 5, la phase d'injection débutant avant la fin de la phase pilote d'admission.

### Cinquième mode : Figure 7

Ce mode est réalisable avec la configuration de la Figure 2.

Il ne se distingue du mode précédent qu'en ce que la phase d'admission pilote se prolonge jusqu'à la fin de la phase d'admission principale, les instants FA1 et FA2 étant confondus.

### Sixième mode : Figure 8

Ce mode est réalisable avec la configuration de la Figure 2.

Il diffère du troisième mode représenté sur la Figure 5 uniquement en ce que la phase d'injection commence durant la phase B de recouvrement des phases d'admission pilote et principale (ou phase de balayage). En d'autres termes, l'instant 01 intervient entre les instants OA1 et FE. L'instant de fin d'injection FI est compris, comme dans le cas précédent, entre les instants FA1 et FA2.

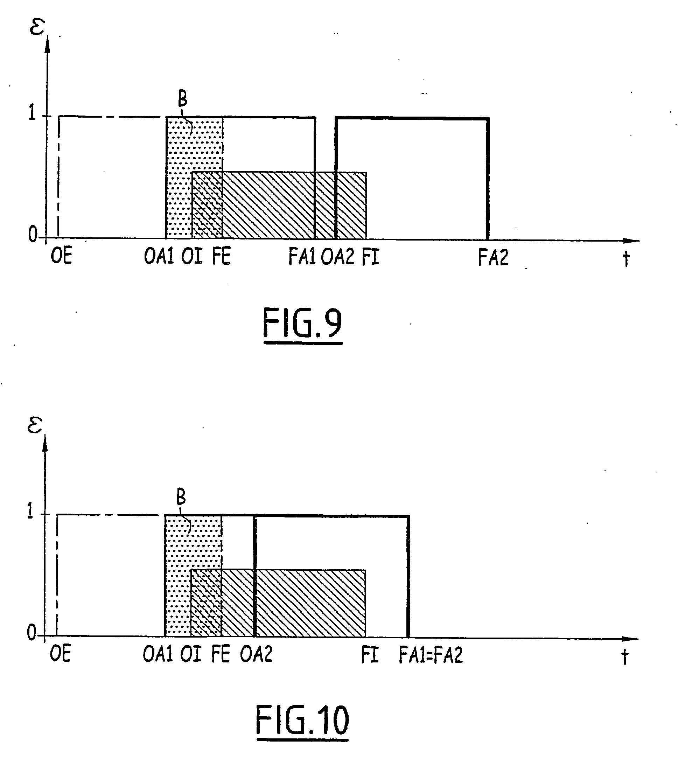

### Septième mode : Figure 9

Ce mode est réalisable avec la configuration de la Figure 1, les phases d'admission pilote et principale étant réalisées successivement, sans recouvrement.

Ce mode de réalisation ne se distingue justement du précédent, qu'en ce que la phase d'admission pilote se termine avant le début de la phase d'admission principale, l'instant de début d'injection 01 intervenant durant la phase de balayage B, et l'instant de fin d'injection FI intervenant durant la phase principale d'admission.

### Huitième mode : Figure 10

Ce mode n'est réalisable qu'avec la configuration de la Figure 2.

Il ne se distingue du mode 7 de la Figure 9 qu'en ce que la phase d'admission pilote se prolonge jusqu'à la fin de la phase d'admission principale, les instants FA1 et FA2 étant confondus.

### Neuvième mode : Figure 11

Ce mode est analogue au premier mode illustré à la Figure 3, en ce que la séquence des différentes phases dans un même cycle de fonctionnement est identique dans les deux cas.

Il s'en distingue néanmoins en ce que l'amplitude d'ouverture (ou de levée) de la soupape d'admission durant la phase pilote d'admission est inférieure à l'amplitude de la soupape d'admission lors de la phase principale d'admission. Lors de la phase pilote d'admission, la variable d'état ε de la soupape d'admission est représentée à une valeur inférieure à 1, pour illustrer une amplitude d'ouverture moindre.

### Dixième mode : Figure 12

Ce mode se distingue du précédent uniquement en ce que l'amplitude d'ouverture lors de la phase d'admission pilote est supérieure à celle lors de la phase d'admission principale. Dans cet exemple, la variable d'état ε de la soupape d'admission lors de la phase principale est représentée à une valeur inférieure à 1.

Les deux derniers modes représentés, à savoir ceux des Figures 11 et 12, illustrent qu'une caractéristique optionnelle du procédé de commande selon l'invention consiste à donner des amplitudes différentes à la soupape d'admission (ou aux soupapes d'admission) selon qu'il s'agisse de la phase pilote ou de la phase principale d'admission. Cette caractéristique pourrait, naturellement, être appliquée à chacun des modes de réalisation qui ont été décrits précédemment.

On notera enfin que, lorsque deux phases d'admission se succèdent sans recouvrement (premier, quatrième et septième modes), on pourra mettre en oeuvre l'invention avec une configuration conforme à la Figure 1, mais également avec une configuration conforme à la Figure 2.

Dans ce dernier cas, la première phase d'admission peut être effectuée par l'ouverture d'une première soupape d'admission, tandis que la deuxième phase d'admission peut être effectuée par l'ouverture de la deuxième soupape d'admission ou encore de la première soupape d'admission.

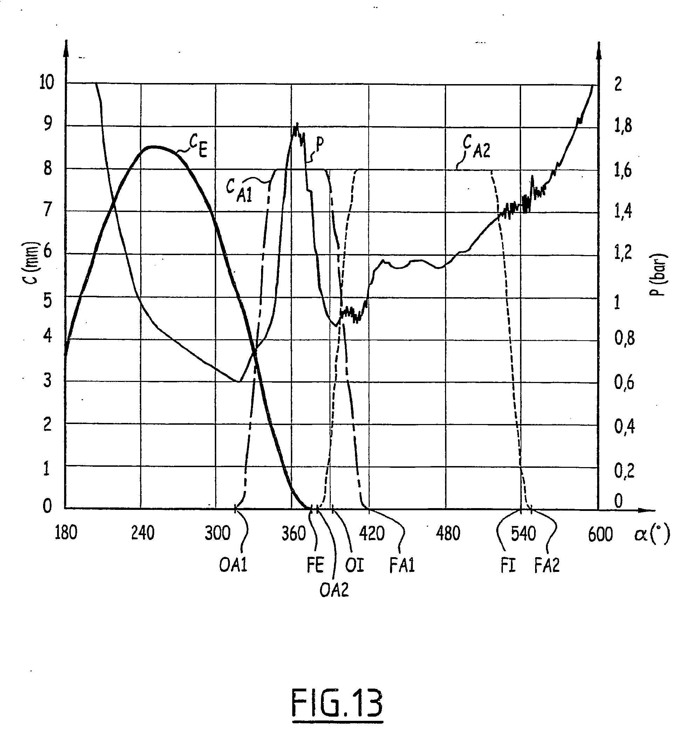

On se réfère à présent à la Figure 13, sur laquelle on a représenté, sur un même graphique, l'évolution de la levée ou course C des soupapes, ainsi que l'évolution de la pression P régnant dans le cylindre, en fonction de la position angulaire α du vilebrequin.

L'ouverture des soupapes est mesurée en mm de course (ou levée), cette mesure étant portée sur l'axe des ordonnées situé à gauche du graphique.

La pression P est mesurée en bars et portée sur l'axe des ordonnées situé à droite.

La position angulaire α du vilebrequin, mesurée en degrés, est portée sur l'axe des abscisses.

Les données représentées sur ce graphique correspondent au mode de réalisation de la Figure 5.

Sur ce graphique, on distingue la courbe CE représentative de l'ouverture de la soupape d'échappement, la courbe C_{A1} représentative de l'ouverture de la soupape d'admission dans la phase pilote, et la courbe C_{A2} représentative de l'ouverture de la soupape d'admission dans la phase principale.

On constate que, dans un même cycle de fonctionnement, la pression décroît fortement durant la phase d'ouverture d'échappement, jusqu'à un minimum atteint à l'instant d'ouverture d'admission pilote OA1.

Dès l'ouverture à l'admission pilote, la pression peut augmenter très rapidement jusqu'à un pic de pression situé sensiblement en milieu de phase d'ouverture pilote. La pression diminue ensuite durant la fermeture de la soupape d'admission pilote. Elle croît à nouveau durant la phase d'admission principale et, bien évidemment, lors de la combustion après la fin de la phase d'ouverture d'admission principale.

Le pic de pression qui apparaît lors de la phase d'admission pilote, qui est dû à l'introduction de gaz frais dans la chambre de combustion, facilite et accentue le phénomène de balayage des gaz brûlés résiduels, consistant en l'éjection de ces gaz par le canal d'échappement, hors de la chambre de combustion.

Ce pic traduit une onde de pression d'air qui apparaît dans le cylindre, et qui permet d'augmenter le remplissage du cylindre, contribuant ainsi à un meilleur rendement du moteur.

Cette onde de pression, qui produit un effet de balayage, résulte de la phase d'admission pilote et de l'existence d'une phase, durant laquelle la chambre est ouverte à l'admission et simultanément à l'échappement.

On notera toutefois que l'onde de pression générant le balayage des gaz brûlés résiduels se manifeste en raison d'une différence de pression entre les orifices d'admission et d'échappement. Cette onde peut parfaitement présenter un profil autre que la forme d'un pic.

Tous les modes de réalisation de l'invention qui ont été décrits permettent d'atteindre ce résultat.

L'exécution d'un procédé conforme à l'invention peut être assurée par l'exécution, par l'unité 40, d'un programme de commande correspondant.

## Revendications

1. Procédé de commande du fonctionnement d'un cylindre de moteur à combustion interne, ledit cylindre (1) étant pourvu d'une chambre de combustion (11) susceptible d'être ouverte ou fermée à l'admission et ouverte ou fermée à l'échappement, et d'au moins un injecteur de carburant (33), procédé dans lequel, durant un même cycle de fonctionnement du cylindre, les phases suivantes sont réalisées :
- une phase d'ouverture à l'échappement entre un instant d'ouverture d'échappement (OE), et un instant de fermeture d'échappement (FE) ;
- une première phase d'ouverture à l'admission entre un premier instant d'ouverture d'admission (OA1) postérieur à l'instant d'ouverture d'échappement (OE), et un premier instant de fermeture d'admission (FA1) ;
- une deuxième phase d'ouverture à l'admission entre un deuxième instant d'ouverture d'admission (OA2), et un deuxième instant de fermeture d'admission (FA2) ;
- une phase d'injection de carburant entre un instant de début d'injection (OI), et un instant de fin d'injection (FI) ; et
- une phase de combustion du mélange air-carburant contenu dans la chambre (11),
**caractérisé en ce que** l'instant de fermeture d'échappement (FE) est compris entre le premier instant d'ouverture d'admission (OA1) et le deuxième instant d'ouverture d'admission (OA2).

2. Procédé suivant la revendication 1, **caractérisé en ce que** le premier instant de fermeture d'admission (FA1) est postérieur à l'instant de fermeture d'échappement (FE).

3. Procédé suivant la revendication 1 ou 2, **caractérisé en ce que** le premier instant de fermeture d'admission (FA1) précède le deuxième instant d'ouverture d'admission (OA2).

4. Procédé suivant la revendication 1 ou 2, **caractérisé en ce que** le deuxième instant d'ouverture d'admission (OA2) précède le premier instant de fermeture d'admission (FA1).

5. Procédé suivant l'une quelconque des revendications 1 à 4, **caractérisé en ce que** le premier instant de fermeture d'admission (FA1) précède l'instant de début d'injection (OI).

6. Procédé suivant l'une quelconque des revendications 1 à 4, **caractérisé en ce que** l'instant de début d'injection (OI) précède le premier instant de fermeture d'admission (FA1).

7. Procédé suivant l'une quelconque des revendications 1 à 6, **caractérisé en ce que** l'instant de début d'injection (OI) est compris entre le premier instant d'ouverture d'admission (OA1) et l'instant de fermeture d'échappement (FE).

8. Procédé suivant l'une quelconque des revendications 1 à 6, **caractérisé en ce que** l'instant de fermeture d'échappement (FE) précède l'instant de début d'injection (OI).

9. Procédé suivant l'une quelconque des revendications 1 à 8, **caractérisé en ce qu'**on règle l'amplitude de l'ouverture à l'admission, de façon que l'amplitude de l'ouverture durant la première phase d'ouverture à l'admission soit différente de l'amplitude de l'ouverture durant la deuxième phase d'ouverture à l'admission.

10. Procédé suivant l'une quelconque des revendications 1 à 9, **caractérisé en ce** lesdites phases sont réalisées durant chaque cycle de fonctionnement du cylindre.

11. Moteur à combustion interne ayant au moins un cylindre (1) pourvu d'une chambre de combustion (11) susceptible d'être ouverte ou fermée à l'admission et ouverte ou fermée à l'échappement, et d'au moins un injecteur de carburant (33), **caractérisé en ce que** ledit moteur comprend une unité de contrôle et de commande qui met en oeuvre un procédé conforme à l'une quelconque des revendications 1 à 10.

12. Véhicule automobile comportant un moteur à combustion interne selon la revendication 11.

## Claims

1. Method for controlling the functioning of an internal combustion engine cylinder, the said cylinder (1) being provided with a combustion chamber (11) which can be open or closed at intake and open or closed at discharge, and at least one fuel injector (33), in which method, during a single cycle of functioning of the cylinder, the following stages are carried out:
- an intake opening stage between a discharge opening instant (OE) and a discharge closure instant (FE);
- a first intake opening stage between a first intake opening instant (OA1) subsequent to the discharge opening instant (OE), and a first intake closure instant (FA1);
- a second intake opening stage between a second intake opening instant (OA2) and a second intake closure instant (FA2);
- a stage of injection of fuel between an instant of start of injection (OI) and an instant of end of injection (FI); and
- a stage of combustion of the air-fuel mixture contained in the chamber (11),
**characterised in that** the discharge closure instant (FE) is contained between the first intake opening instant (OA1) and the second intake opening instant (OA2).

2. Method according to claim 1, **characterised in that** the first intake closure instant (FA1) is subsequent to the discharge closure instant (FE).

3. Method according to claim 1 or claim 2, **characterised in that** the first intake closure instant (FA1) precedes the second intake opening instant (OA2).

4. Method according to claim 1 or claim 2, **characterised in that** the second intake opening instant (OA2) precedes the first intake closure instant (FA1).

5. Method according to any one of claims 1 to 4,
**characterised in that** the first intake closure instant (FA1) precedes the instant of start of injection (OI).

6. Method according to any one of claims 1 to 4,
**characterised in that** the instant of start of injection (OI) precedes the first intake closure instant (FA1).

7. Method according to any one of claims 1 to 6,
**characterised in that** the instant of start of injection (OI) is contained between the first intake opening instant (OA1) and the discharge closure instant (FE).

8. Method according to any one of claims 1 to 6,
**characterised in that** the discharge closure instant (FE) precedes the instant of start of injection (OI).

9. Method according to any one of claims 1 to 8,
**characterised in that** the intake opening amplitude is regulated such that the opening amplitude during the first intake opening stage is different from the opening amplitude during the second intake opening stage.

10. Method according to any one of claims 1 to 9,
**characterised in that** the said stages are carried out during each cycle of functioning of the cylinder.

11. Internal combustion engine having at least one cylinder (1) provided with a combustion chamber (11) which can be open or closed at intake and open or closed at discharge, and at least one fuel injector (33), **characterised in that** the said engine comprises a control and command unit which implements a method according to any one of claims 1 to 10.

12. Motor vehicle comprising an internal combustion engine according to claim 11.

## Patentansprüche

1. Verfahren zum Steuern der Arbeit eines Zylinders einer Brennkraftmaschine, welcher Zylinder (1) eine Verbrennungskammer (11), die beim Einlasstakt geöffnet oder geschlossen werden kann und die beim Auslasstakt geöffnet oder geschlossen werden kann, und wenigstens einen Kraftstoffeinspritzer (33) aufweist, bei welchem Verfahren während des selben Arbeitszyklus des Zylinders die folgenden Phasen ablaufen:
- eine Auslassöffnungsphase zwischen einem Zeitpunkt der Auslassöffnung (OE) und einem Zeitpunkt der Auslassschließung (FE),
- eine erste Einlassöffnungsphase zwischen einem ersten Zeitpunkts der Einlassöffnung (OA1) nach dem Zeitpunkt der Auslassöffnung (OE) und einem ersten Zeitpunkt der Einlassschließung (FA1),
- eine zweite Einlassöffnungsphase zwischen einem zweiten Zeitpunkt der Einlassöffnung (OA2) und einem zweiten Zeitpunkt der Einlassschließung (FA2),
- eine Kraftstoffeinspritzphase zwischen einem Einspritzanfangszeitpunkt (OI) und einem Einspritzendzeitpunkt (FI) und
- eine Phase der Verbrennung des Luftkraftstoffgemisches, das sich in der Kammer (11) befindet,
**dadurch gekennzeichnet, dass** der Zeitpunkt der Auslassschließung (FE) zwischen dem ersten Zeitpunkt der Einlassöffnung (OA1) und dem zweiten Zeitpunkt der Einlassöffnung (OA2) liegt.

2. Verfahren nach Anspruch 1, **dadurch gekennzeichnet, dass** der erste Zeitpunkt der Einlassschließung (FA1) hinter dem Zeitpunkt der Auslassschließung (FE) liegt.

3. Verfahren nach Anspruch 1 oder 2, **dadurch gekennzeichnet, dass** der erste Zeitpunkt der Einlassschließung (FA1) dem zweiten Zeitpunkt der Einlassöffnung (OA2) vorausgeht.

4. Verfahren nach Anspruch 1 oder 2, **dadurch gekennzeichnet, dass** der zweite Zeitpunkt der Einlassöffnung (OA2) dem ersten Zeitpunkt der Einlassschließung (FA1) vorausgeht.

5. Verfahren nach einem der Ansprüche 1 bis 4, **dadurch gekennzeichnet, dass** der erste Zeitpunkt der Einlassschließung (FA1) dem Einspritzanfangszeitpunkt (OI) vorausgeht.

6. Verfahren nach einem der Ansprüche 1 bis 4, **dadurch gekennzeichnet, dass** der Einspritzanfangszeitpunkt (OI) den ersten Zeitpunkt der Einlassschließung (FA1) vorausgeht.

7. Verfahren nach einem der Ansprüche 1 bis 6, **dadurch gekennzeichnet, dass** der Einspritzanfangszeitpunkt (OI) zwischen dem ersten Zeitpunkt der Einlassöffnung (OA1) und dem Zeitpunkt der Auslassschließung (FE) liegt.

8. Verfahren nach einem der Ansprüche 1 bis 6, **dadurch gekennzeichnet, dass** der Zeitpunkt der Auslassschließung (FE) dem Einspritzanfangszeitpunkt (OI) vorausgeht.

9. Verfahren nach einem der Ansprüche 1 bis 8, **dadurch gekennzeichnet, dass** man die Größe der Einlassöffnung derart einstellt, dass die Größe der Öffnung während der ersten Phase der Einlassöffnung von der Größe der Öffnung während der zweiten Phase der Einlassöffnung verschieden ist.

10. Verfahren nach einem der Ansprüche 1 bis 9, **dadurch gekennzeichnet, dass** die besagten Phasen während jedes Arbeitszyklus des Zylinders ablaufen.

11. Brennkraftmaschine mit wenigstens einem Zylinder (1), der eine Verbrennungskammer (11), die im Einlasstakt geöffnet oder geschlossen werden kann und die im Auslasstakt geöffnet oder geschlossen werden kann, und wenigstens einen Kraftstoffeinspritzer (33) aufweist, **dadurch gekennzeichnet, dass** die Maschine eine Baueinheit zum Betreiben und Steuern umfasst, die das Verfahren nach einem der Ansprüche 1 bis 10 durchführt.

12. Kraftfahrzeug mit einer Brennkraftmaschine nach Anspruch 11.
